(19)

**Europäisches Patentamt**
**European Patent Office**
**Office européen des brevets**

(11)  **EP 3 996 034 B1**

(12)  **EUROPEAN PATENT SPECIFICATION**

(45) Date of publication and mention
of the grant of the patent:
**16.04.2025  Bulletin 2025/16**

(21) Application number: **20206032.3**

(22) Date of filing: **05.11.2020**

(51) International Patent Classification (IPC):
**G06T 5/60** *(2024.01)*      **G06T 5/70** *(2024.01)*
**G06N 3/045** *(2023.01)*      **G06N 3/08** *(2023.01)*

(52) Cooperative Patent Classification (CPC):
**G06T 5/70; G06N 3/045; G06N 3/08; G06T 5/60;**
G06N 7/01; G06T 2207/10056; G06T 2207/20081;
G06T 2207/20084

(54) **METHODS AND SYSTEMS FOR TRAINING CONVOLUTIONAL NEURAL NETWORKS**

VERFAHREN UND SYSTEME ZUM TRAINIEREN VON NEURONALEN FALTUNGSNETZWERKEN

PROCÉDÉS ET SYSTÈMES DE FORMATION DE RÉSEAUX NEURONAUX CONVOLUTIONNELS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.05.2022  Bulletin 2022/19**

(73) Proprietor: **Leica Microsystems CMS GmbH**
**35578 Wetzlar (DE)**

(72) Inventor: **Serra Lleti, José Miguel**
**35578 Wetzlar (DE)**

(74) Representative: **Paustian & Partner**
**Patentanwälte mbB**
**Oberanger 32**
**80331 München (DE)**

(56) References cited:
**US-B1- 10 032 256**

• YUE HUANJING ET AL: "Deep Joint Noise
Estimation and Removal for High ISO JPEG
Images", 2018 24TH INTERNATIONAL
CONFERENCE ON PATTERN RECOGNITION
(ICPR), IEEE, 20 August 2018 (2018-08-20), pages
153 - 158, XP033454129, DOI: 10.1109/
ICPR.2018.8545410
• JAAKKO LEHTINEN ET AL: "Noise2Noise:
Learning Image Restoration without Clean Data",
ARXIV.ORG, CORNELL UNIVERSITY LIBRARY,
201 OLIN LIBRARY CORNELL UNIVERSITY
ITHACA, NY 14853, 12 March 2018 (2018-03-12),
XP081259605
• GUOLIANG  KANG: "PatchShuffle
regularization", ARXIV.ORG, 22 July 2017
(2017-07-22), Ithaca, pages 1 - 10, XP093160710,
Retrieved from the Internet <URL:https://arxiv.
org/pdf/1707.07103> [retrieved on 20240508],
DOI: 10.48550/ARXIV.1707.07103

**Description**

**Description**

The present invention relates to a method for training a convolutional neural network.

Image denoising is used to process images contaminated by additive noise to achieve both noise reduction while preserving the features of the image. The inventor has identified that additive noise may be introduced when users try to minimize photo bleaching and photo toxicity by minimizing the energy input, which may be achieved by reducing the exposure time or gain at the cost of increasing the amount of noise. In a typical workflow, images are acquired at low exposure time or gain, resulting in low quality images, which may contain noise from electronic sources (e.g. Gaussian noise, salt and pepper noise, and shot noise) or sample dependent high frequency noise due to quantization, sensitivity or heat from camera sensors.

YUE HUANJING ET AL: Deep Joint Noise Estimation and Removal for High ISO JPEG Images" 2018 24TH INTERNATIONAL CONFERENCE ON PATTERN RECOGNITION (ICPR), IEEE, 20 August 2018 (2018-08-20), pages 153-158, XP033454129, DOI: 10.1109/1CPR.2018.8545410 disclose a convolutional neural network (CNN) based method to jointly estimate and remove high ISO noise. First, a CNN-based noise estimation method is disclosed to estimate a pixel-wise noise level. Second, the noise variance map is correlated with the image content.

US 10032256 B1 discloses an image processing method comprising the steps of dividing each training image of a dataset of training images into a plurality of training images patches; and of applying an image processing algorithm, over a range of possible tuning parameters, to each of the plurality of training image patches to generate a plurality of performance curves; and of constructing a loss function based upon the plurality of performance curves.

JAAKKO LEHTINEN ET AL: "Noise2Noise: Learning Image Restoration without Clean Data" ARXIV.ORG, CORNELL UNIVERSITY LIBRARY, 201 OLIN LIBRARY CORNELL UNIVERSITY ITHACA, NY 14853, 12 March 2018 (2018-03-12), XP081259605 disclose to apply basic statistical reasoning to signal re-construction by machine learning thereby it is intended to map corrupted observations to clean signals and to reduce noise in images. Guoliang Kang: "PatchShuffle regularization", arXiv.org, 22 July 2017 (2017-07-22), pages 1-10, XP093160710, Ithaca DOI: 10.48550/ARXIV.1707.07103 discloses regularizing a training of a convolutional neural network. It is disclosed to separate a data set into patches. In each patch a transformation is applied such that pixels within the patch are shuffled.

A problem solved by the present invention is how to denoise images and obtain a good signal-to-noise (SNR).

This object is solved by the disclosed embodiments. The invention is delimited by the appended independent claims. The dependent claims provide information for further embodiments.

In an embodiment of the invention there is provided a computer implemented method for training a convolutional neural network, the method comprising: receiving a captured image; generating a statistical noise model based on the captured image; and training a convolutional neural network based on the captured image and the statistical model. Thus, the SNR can be increased when training the convolutional neural network using one, or more, acquired images.

In a possible implementation of the embodiment generating the statistical model comprises: determining variance or standard deviation values for pixels in the captured image according to a ground truth or simulated ground truth; and generating the statistical model based on the variance or standard deviation values. Hence, the convolutional neural network can be trained more efficiently and based on real acquired images, and may not utilize so-called training images.

In the embodiment training the convolutional neural network comprises: dividing the captured image in to random patches; swapping pixel values in each random patch with neighbour pixel values; and training the convolutional neural network based on the random patches of the captured image and the random patches of the captured image comprising swapped pixel values.

In a possible implementation of the embodiment training the convolutional neural network comprises: determining a probability of pixel values of the random patches comprising swapped pixel values based on the statistical model; and training the convolutional neural network by maximizing the probability of each pixel value of the random patches comprising swapped pixel values. Accordingly, the convolutional neural network can be trained and utilized using the first, and subsequently, acquired images without necessarily relying on training data.

In a possible implementation of the embodiment maximizing the probability of each pixel value comprises minimizing the negative log of an average of all pixel probabilities.

In a possible implementation of the embodiment the probability for each pixel value is determined based on a Gaussian distribution with a mean value and a variance or standard deviation value, wherein the mean value is a mean value of each pixel of the random patches of the captured image and the variance or standard deviation value is obtained from the statistical model. Alternative techniques for determining the variance values may include, determining variances of noise based on the counts of the camera (i.e. the gain) in an image, or modelling the fluorescence to determine the variance of any noise between an expected object and an obtained object in a specific frame with exposure time t. Generally, techniques can be used which create a model that spits the variance values of each pixel based either on camera gain or modelling the fluorescence of an imaged object.

In a possible implementation of the embodiment the method comprises applying the trained convolutional neural network to the captured image.

In a possible implementation of the embodiment the method comprising correcting each pixel probability of an image generated by the trained convolutional neural network using the statistical model, and averaging each generated pixel probability with each corrected pixel probability.

In the embodiment the method comprising: receiving a further captured image; updating the statistical model based on the captured image and the further captured image; determining if there is a reduction in a variance or standard deviation value of the updated statistical model compared with the variance model; and retraining the convolutional neural network based on the further captured image and the updated statistical model if it is determined that there is a reduction in a variance or standard deviation value of the updated statistical model compared with the statistical model. Hence, the performance of the convolutional neural network can be improved every time a new image is acquired.

In a possible implementation of the embodiment the convolutional neural network is an encoder-decoder neural network.

In an embodiment of the invention there is provided a system comprising one or more processors and one or more storage devices, wherein the system is configured to perform the methods described above.

In a possible implementation of the embodiment the system comprises an imaging device coupled to the processor for acquiring microscopy images.

In an embodiment of the invention there is provided a trained convolutional neural network trained by: receiving a captured image; generating a statistical noise model based on the captured image; and adjusting the convolutional neural network based on the captured image and the statistical model.

In an embodiment of the invention there is provided a computer program with a program code for performing the methods described above.

The present disclosure can be understood with reference to the description of the embodiments set out below, in conjunction with the appended drawings in which:

Figure 1 illustrates a method for training a convolutional neural network according to an embodiment of the invention;

Figure 2 illustrates a graph of variance against each value in a grey scale for one image;

Figure 3 illustrates a graph of variance against each value in a grey scale for 1000 images;

Figure 4 illustrates a method for training a convolutional neural network according to a further embodiment of the invention;

Figure 5 is an acquired image, for example a microscopy image, before being processed;

Figure 6 is an image after being processing using a trained convolutional neural network trained according to an embodiment of the invention;

Figure 7 is a ground truth of the acquired image; and

Figure 8 illustrates a system for performing a method for training a convolutional neural network according to a further embodiment of the invention.

The inventor has identified a way of understanding the problem of denoising is to consider ideal pictures (high signal to noise ratio, SNR) together with a mathematical distribution that adds random values to each pixel of the obtained image. This function can be modelled, for example, in the case of fluorescence, using a Poisson-Gaussian distribution where Poisson noise (also called shot noise) is the dominant source.

If a major part of the information is remaining in the image, the values of the noisy pixels can be estimated statistically from the neighbourhood of each pixel. If we consider a Gaussian distribution for each pixel, we have a mean value and the variance (or standard deviation). The bigger the variance (or standard deviation), the bigger the noise and the lower the SNR (i.e. poor image quality).

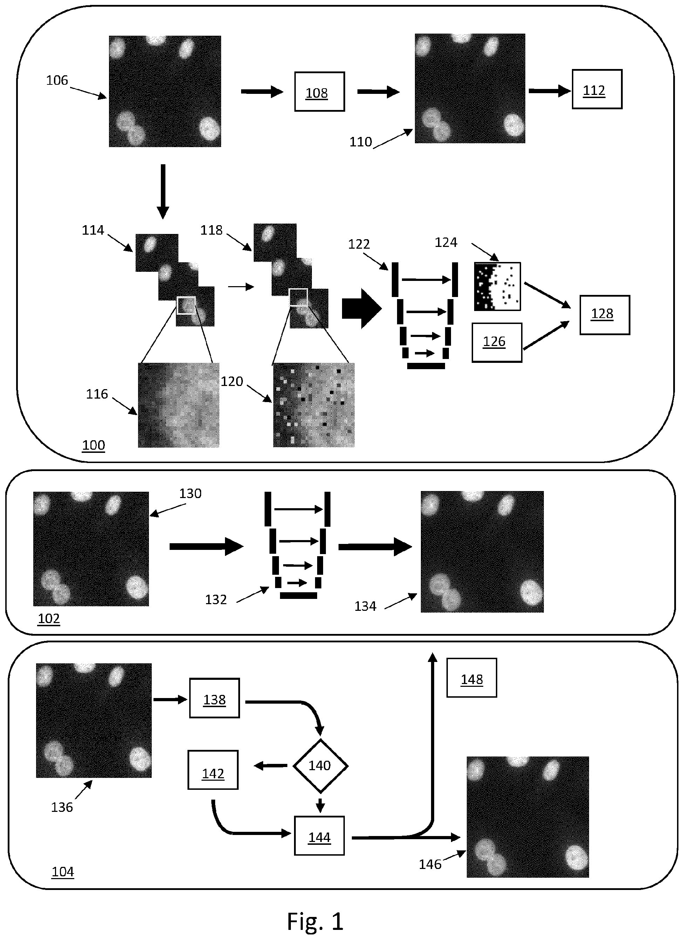

Figure 1 illustrates a method for training a convolutional neural network according to an embodiment of the invention. The convolutional neural network forms part of an on-the-fly training system, which may be pretrained by a manufacturer, but is trained during its application at a customer. The pretraining performed by the manufacturer may include the application of the method of embodiments of the invention. A convolutional neural network is a form of machine learning algorithm or model.

In figure 1, there are three overall processing steps. These steps are training 100, processing 102, and repeated training 104.

In step 100, an image 106 is acquired from a microscope, for example (i.e. a microscopy image). A simulated ground truth image 112 is obtained by applying Gaussian smoothing 108, for example, to the acquired image 106. Alternatives to Gaussian smoothing include average filtering (e.g. weighting by average pixels), bilateral filtering, non-local means (NLM) smoothing, and block-matching and 3D filtering (BM3D). If a ground truth image exists (i.e. the same image with a very high peak signal to noise ratio, PSNR) it may not be necessary to obtain a simulated ground truth. The acquired image 106 is compared to the simulated ground truth image 110, and the variances of each pixel value are extracted to produce an average variance value for each value in a greyscale of 0-255 or a colour scale of 0-65536. The variance values may be determined using each value in a 2D histogram based on the acquired image 106 and the simulated ground truth image. A model 112 is subsequently fitted to the average variance values. The model might be a polynomial, an exponential or other suitable statistical model, which is derived by plotting the variance values. Alternative techniques for determining the variance values may include, determining variances of noise based on the counts of the camera (i.e. the gain) in an image, or modelling the fluorescence to determine the variance of any noise between an expected object and an obtained object in a specific frame with exposure time t. Generally, techniques can be used which create a model that spits the variance values of each pixel based either on camera gain or modelling the fluorescence of an imaged object.

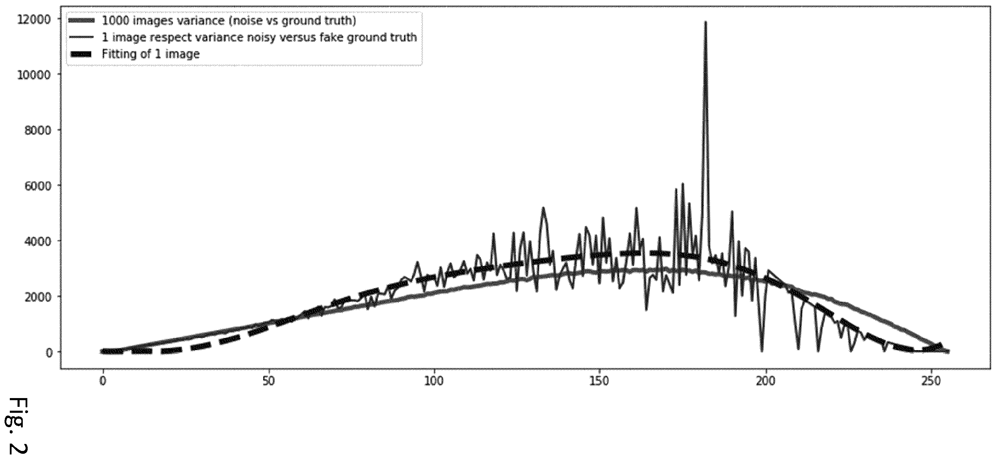

Figure 2 illustrates a graph of average variance for each value in a grey scale for one image. In the graph the "1000 images variance (noise vs ground truth)" thick solid line represents an ideal statistical model, the "1 image respect variance noisy versus fake ground truth" thick solid line represents the values acquired by comparing the acquired image 106 against the simulated ground truth image 110, and the "Fitted of 1 image" dashed line represents the statistical model fitted to the "One image fake GT".

Returning to figure 1, the captured image 106 is cropped, or divided into random patches 114. These patches 114 are typically square and represent sections of the acquired image 106 and each patch may overlap with neighbouring patches. The size of each patch is determined based on the size of the image and the processing power of the image processing device used, and might be up to 256x256 pixels, for example. A typical patch might be 64x64 pixels such that a 512x512 pixel image would be divided into 64 patches. Some pixels are selected from each random patch 114 using a uniform random distribution and the pixel values of the selected pixels are swapped or replaced by values from neighbouring pixels to produce random patches of the captured image comprising swapped pixel values 118. Generally, between 1% and 10% of the pixels may be swapped or replaced within the patches Image 116 illustrates a magnified section of one of the random patches 114 and image 120 illustrates a magnified section of one of the random patches of the captured image comprising swapped pixel values 118.

The random patches of the captured image comprising swapped pixel values 118 are subsequently used to train a convolutional neural network (CNN) 122. In this example, a U-net is trained, although it will be appreciated that other contracting-expanding, or encoder-decoder CNNs might be used such as a Resnet (e.g. resnet-18). In particular, a dynamic U-net (encoder resnet-18) with a sub-pixel convolution (Pixel shuffle) in the merge layer may be used. The CNN 122 is trained based on the random patches of the captured image comprising swapped pixel values 118 and variance values obtained using the model 112. The CNN 122 maximizes the probability that each pixel in the acquired image belongs in the acquired image (i.e. the CNN 122 maximizes the probability that each pixel in the acquired image is not a result of noise). This is achieved by minimizing the negative log of the average of all pixel probabilities based on the following expression 128:

$$argmin \sum_{i=1}^{n} -\ln\left(\frac{1}{M}\sum_{m=1}^{M} p(x_m \mid s_m)\right)$$

where $n$ **is** the number of random patches, M is the number of pixels masked (i.e. swapped or replaced pixels), $x_m$ is the $m$-th pixel value in the image with replaced values 118 represented by 124 in figure 1, and $s_m$ is the m-th pixel value in the random patches 114 of the acquired image 106 represented by 126 in figure 1. Z-scores and probabilities are derived from a Gaussian distribution with mean values obtained using the pixel values of the random patches of the captured image and variance values obtained from the variance model.

In step 102, the trained CNN 132 is applied to denoise an acquired image 130, which may correspond to the acquired image 106, or similar images thereto, to obtain a denoised image 134.

In step 104, a new, further image 136 is acquired, and a new statistical model 138 is generated based on the variance values of the acquired image 130 and the acquired further image 136. The new statistical model 138 is compared to the previous statistical model 112 generated in step 100, and a decision 140 is made as to whether or not there is a reduction in any variance value in the statically model. If there is a reduction in a variance value in the new statistical model 138 the CNN 132 is retained 142 using the further acquired image 136 and the new statistical model 138, and any previously acquired images, such as acquired image 106. The retrained CNN is subsequently applied to the acquired further image 136.

If there is no reduction in a variance value in the new statistical model 138 the further acquired image 136 is denoised 144 based on the CNN 132 without further training to obtain denoise image 146.

Additionally, each pixel probability of any denoised images 134, 146 may be estimated and corrected using a current statistical model and being averaged with itself.

It may also be desirable to update 148 any previously denoised images based on the latest CNN and statistical model, and to retrain the CNN 132 based on previously acquired images and any new statistical model.

Step 104 is repeated until there is no detectable reduction in a new statistical model when compared to a previous statistical model. In this regard, Step 104 is repeated until the differences between the previous and the new models are 0 +/- a tolerance (e.g. a tolerance of +/- 0.1 to 1%, +/- 0.1 to 2%, +/- 0.1 to 3%, +/- 0.1 to 4%, or +/- 0.1 to 5%)

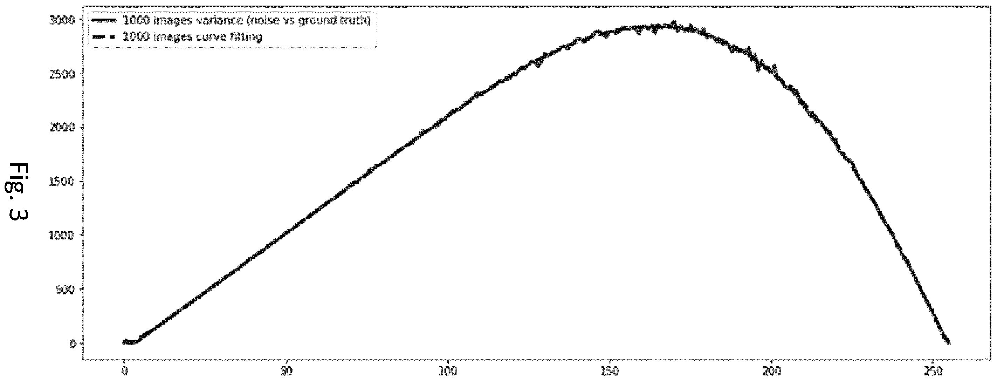

Figure 3 illustrates a graph of variance against each value in a grey scale for 1000 images. In the graph the "1000 images variance (noise vs ground truth)" solid line represents the variance data obtained from 1000 images, and the "1000 images curve fitting" dashed line represents the statistical model fitted to the "1000 images variance (noise vs ground truth)" line. It is apparent that after 1000 images, for example, there is no longer a reduction in the variance, and the model no longer needs to be updated. However, it will be appreciated that fewer images might be used, such as 50 images.

If a system performing the above mentioned method acquires new successive images or its parameters are updated (laser power, acquisition speed, exposure time change, etc.), the new "noisy" images may be evaluated. If the variances have reduced with respect to a previous statistical model, then the model can be updated using the methods described herein. Thus, the quality of the images can be improved iteratively along the course of an experiment, for example.

Reference has been made herein to a variance value, but it will be understood that a standard deviation value might also be used.

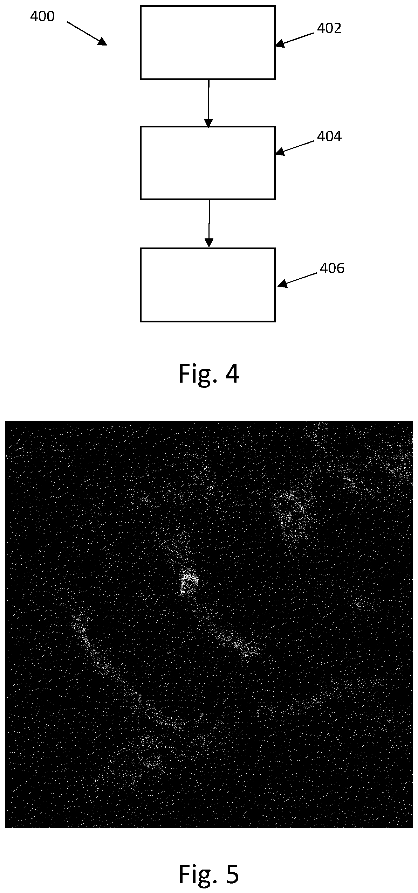

Figure 4 illustrates a method 400 for training a convolutional neural network according to a further embodiment of the invention. The method comprises receiving a captured image 402; generating a statistical noise model based on the captured image 404; and training a convolutional neural network based on the captured image and the statistical model 406.

Figure 5 is an acquired image, for example a microscopy image, before being processed.

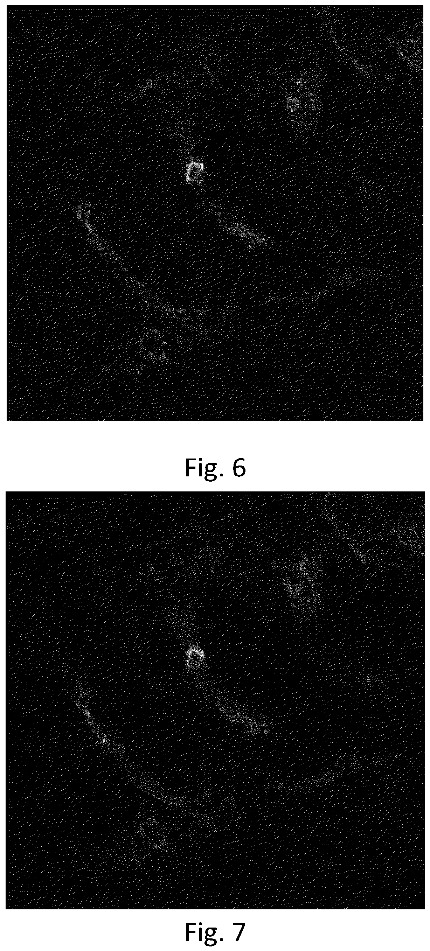

Figure 6 is an image after being processing using a trained convolutional neural network trained according to an embodiment of the invention. It is apparent from the image in figure 6 that the SNR has been improved with respect to the acquired image.

Figure 7 is a ground truth of the acquired image.

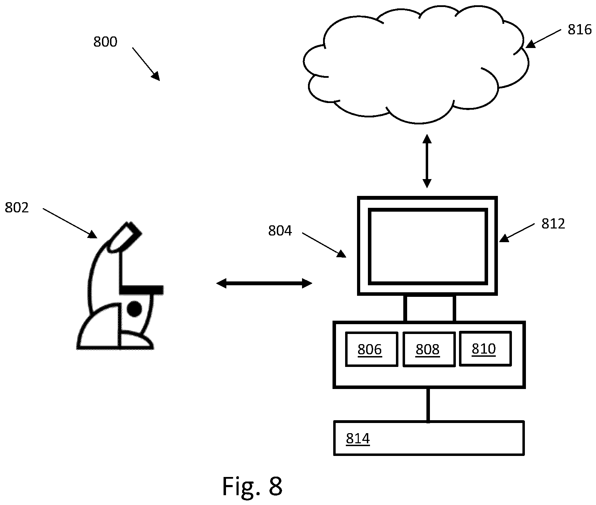

Figure 8 shows a schematic illustration of a system 800 configured to perform a method described herein. The system 800 comprises a microscope 802 and a computer system 804. The microscope 802 is configured to take images and is connected to the computer system 804. The computer system 804 is configured to execute at least a part of a method described herein. The computer system 804 may be configured to execute a machine learning algorithm. The computer system 804 and microscope 802 may be separate entities but can also be integrated together in one common housing. The computer system 604 may be part of a central processing system of the microscope 802 and/or the computer system 804 may be part of a subcomponent of the microscope 802, such as a sensor, an actor, a camera or an illumination unit, etc. of the microscope 802.

The computer system 804 may be a local computer device (e.g. personal computer, laptop, tablet computer or mobile phone) with one or more processors and one or more storage devices or may be a distributed computer system (e.g. a cloud computing system 816 with one or more processors and one or more storage devices distributed at various locations, for example, at a local client and/or one or more remote server farms and/or data centers). The computer system 804 may comprise any circuit or combination of circuits. In one embodiment, the computer system 804 may include one or more processors 806, which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor 808, a digital signal processor (DSP), multiple core processor, a field programmable gate array (FPGA), for example, of a microscope or a microscope component (e.g. camera) or any other type of processor or processing circuit. Other types of circuits that may be included in the computer system 804 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 804 may include one or more storage devices 810, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 602 may also include a display device 812, one or more speakers, and a keyboard and/or controller 814, which can include a mouse, trackball, touch screen, voice-recognition device, or any other device that permits a system user to input information into and receive information from the computer system 804.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rulebased transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a preprocessing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

## Reference numerals

| | |
|---|---|
| 100 | Training step |
| 102 | Processing step |
| 104 | Repeated training step |
| 106 | Acquired image |
| 108 | Gaussian smoothing |
| 110 | Simulated ground truth image |
| 112 | Statistical model |
| 114 | Random patches |
| 116 | Magnified section of a random patch |
| 118 | Captured image comprising swapped pixel values |
| 120 | Magnified section of a random patches comprising swapped pixel values |
| 122 | Convolutional neural network (CNN) |
| 124 | $x_m$ |
| 126 | $s_m$ |
| 128 | Representative expression |
| 130 | Acquired image |
| 132 | Trained CNN |
| 134 | Denoised image |
| 136 | Acquired further image |
| 138 | New statistical model |
| 140 | Decision as to whether or not to retrain the CNN |
| 142 | Retrain the CNN |
| 144 | Denoise a further acquired image |
| 146 | Denoised image |
| 148 | Update any previously denoised images and retrain the CNN |
| 800 | System |
| 802 | Microscope |
| 804 | Computer system |
| 806 | One or more processors |
| 808 | Graphics processor |
| 810 | One or more storage devices |
| 812 | Display device |
| 814 | Keyboard and/or controller |
| 816 | Cloud computing system |

## Claims

1. A computer implemented method (400) for training an image denoising convolutional neural network, the method comprising:

   receiving (402) a captured image (106);
   generating (404) a statistical noise model (122) based on the captured image; and
   training (406) a convolutional neural network (122) based on the captured image and the statistical model;
   wherein training the convolutional neural network comprises:

   dividing the captured image into random patches (114);
   swapping pixel values in each random patch with neighbour pixel values; and
   training the convolutional neural network based on the random patches of the captured image and the random patches of the captured image comprising swapped pixel values (118);

   further comprising:

   receiving a further captured image;
   updating the statistical model based on the captured image and the further captured image;
   determining if there is a reduction in a variance or standard deviation value of the updated statistical model compared with the variance model; and
   retraining the convolutional neural network based on the further captured image and the updated statistical model if it is determined that there is a reduction in a variance or standard deviation value of the updated statistical model compared with the statistical model.

2. The method according to claim 1, wherein generating the statistical model comprises:

   determining variance or standard deviation values for pixels in the captured image according to a ground truth or simulated ground truth (110); and
   generating the statistical model based on the variance or standard deviation values.

3. The method according to claim 1, wherein training the convolutional neural network comprises:

   determining a probability of pixel values of the random patches comprising swapped pixel values based on the statistical model; and
   training the convolutional neural network by maximizing the probability of each pixel value of the random patches comprising swapped pixel values.

4. The method according to claim 3, wherein maximizing the probability of each pixel value comprises minimizing the negative log of an average of all pixel probabilities.

5. The method according to claim 3 or claim 4, wherein the probability for each pixel value is determined based on a Gaussian distribution with a mean value and a variance or standard deviation value, wherein the mean value is a mean value of each pixel of the random patches of the captured image and the variance or standard deviation value is obtained from the statistical model.

6. The method according to any preceding claim, comprising applying the trained convolutional neural network to the captured image.

7. The method according to any preceding claim, wherein the convolutional neural network is an encoder-decoder neural network.

8. A system comprising one or more processors and one or more storage devices (610), wherein the system is configured to perform the method of any one of claims 1 to 7.

9. The system of claim 8, comprising an imaging device coupled to the processor for acquiring microscopy images.

10. A trained image denoising convolutional neural network trained in accordance with the method of any one of claims 1 to 7.

11. A computer program with a program code for performing the method according to any one of claims 1 to 7.

**Patentansprüche**

1. Computerimplementiertes Verfahren (400) zum Trainieren eines gefalteten neuronalen Netzwerks zur Bildentrauschung, wobei das Verfahren Folgendes umfasst:

Empfangen (402) eines aufgenommenen Bildes (106);
Erzeugen (404) eines statistischen Rauschmodells (122) auf der Grundlage des aufgenommenen Bildes; und
Trainieren (406) eines gefalteten neuronalen Netzwerks (122) auf der Grundlage des aufgenommenen Bildes und des statistischen Modells;
wobei das Trainieren des gefalteten neuronalen Netzwerks Folgendes umfasst:

   Aufteilen des aufgenommenen Bildes in zufällige Teilbereiche (114);
   Austauschen von Pixelwerten in jedem zufälligen Teilbereich mit Pixelwerten von Nachbarn; und
   Trainieren des gefalteten neuronalen Netzwerks auf der Grundlage der zufälligen Teilbereiche des aufgenommenen Bildes und der zufälligen Teilbereiche des aufgenommenen Bildes, die ausgetauschte Pixelwerte (118) umfassen;

weiter umfassend:

   Empfangen eines weiteren aufgenommenen Bildes;
   Aktualisieren des statistischen Modells auf der Grundlage des aufgenommenen Bildes und des weiteren aufgenommenen Bildes;
   Bestimmen, ob eine Verringerung des Varianz- oder Standardabweichungswerts des aktualisierten statistischen Modells im Vergleich zum Varianzmodell vorliegt, und
   Neutrainieren des gefalteten neuronalen Netzes auf der Grundlage des weiteren aufgenommenen Bildes und des aktualisierten statistischen Modells, wenn bestimmt wird, dass eine Verringerung des Varianz- oder Standardabweichungswerts des aktualisierten statistischen Modells im Vergleich zum statistischen Modell vorliegt.

2. Verfahren nach Anspruch 1, wobei das Erzeugen des statistischen Modells Folgendes umfasst:

   Bestimmen von Varianz- oder Standardabweichungswert für Pixel in dem aufgenommenen Bild gemäß einer Ground Truth oder einer simulierten Ground Truth (110); und
   Erzeugen des statistischen Modells auf der Grundlage des Varianz- oder Standardabweichungswerts.

3. Verfahren nach Anspruch 1, wobei das Trainieren des gefalteten neuronalen Netzwerks Folgendes umfasst:

Bestimmen einer Wahrscheinlichkeit von Pixelwerten der zufälligen Teilbereiche, die ausgetauschte Pixelwerte umfassen, auf der Grundlage des statistischen Modells; und

Trainieren des gefalteten neuronalen Netzwerks durch Maximieren der Wahrscheinlichkeit jedes Pixelwerts der zufälligen Teilbereiche, die ausgetauschte Pixelwerte umfassen.

4. Verfahren nach Anspruch 3, wobei das Maximieren der Wahrscheinlichkeit jedes Pixelwerts das Minimieren des negativen Logarithmus eines Durchschnitts aller Pixelwahrscheinlichkeiten umfasst.

5. Verfahren nach Anspruch 3 oder Anspruch 4, wobei die Wahrscheinlichkeit für jeden Pixelwert auf der Grundlage einer Gaußschen Verteilung mit einem mittleren Wert und einem Varianz- oder Standardabweichungswert bestimmt wird, wobei der mittlere Wert ein mittlerer Wert jedes Pixels der zufälligen Teilbereiche des aufgenommenen Bildes ist und der Varianz- oder Standardabweichungswert aus dem statistischen Modell erhalten wird.

6. Verfahren nach einem der vorstehenden Ansprüche, umfassend das Anwenden des trainierten gefalteten neuronalen Netzwerks auf das aufgenommene Bild.

7. Verfahren nach einem der vorstehenden Ansprüche, wobei das gefaltete neuronale Netzwerk ein neuronales Encoder-Decoder-Netzwerk ist.

8. System, umfassend einen oder mehrere Prozessoren und eine oder mehrere Speichervorrichtungen (610), wobei das System so konfiguriert ist, dass es das Verfahren nach einem der Ansprüche 1 bis 7 durchführt.

9. System nach Anspruch 8, umfassend eine mit dem Prozessor gekoppelte Bildgebungsvorrichtung zur Aufnahme von Mikroskopiebildern.

10. Auf das Verfahren nach einem der Ansprüche 1 bis 7 trainiertes, gefaltetes neuronales Netzwerk zur Bildentrauschung.

11. Computerprogramm mit einem Programmcode zur Durchführung des Verfahrens nach einem der Ansprüche 1 bis 7.

**Revendications**

1. Procédé implémenté par ordinateur (400) permettant de former un réseau neuronal convolutionnel pour le débruitage d'image, le procédé comprenant :

la réception (402) d'une image capturée (106) ;

la génération (404) d'un modèle de bruit statistique (122) sur la base de l'image capturée ; et la formation (406) d'un réseau neuronal convolutionnel (122) sur la base de l'image capturée et du modèle statistique ;

dans lequel la formation du réseau neuronal convolutionnel comprend :

la division de l'image capturée en parcelles aléatoires (114) ;
l'échange de valeurs de pixel dans chaque parcelle aléatoire avec des valeurs de pixel voisin ; et
la formation du réseau neuronal convolutionnel sur la base des parcelles aléatoires de l'image capturée et des parcelles aléatoires de l'image capturée comprenant des valeurs de pixel échangées (118) ;

comprenant en outre :

la réception d'une autre image capturée ;
l'actualisation du modèle statistique sur la base de l'image capturée et de l'autre image capturée ;
la détermination du fait de savoir s'il y a une réduction d'une valeur de variance ou d'écart-type du modèle statistique actualisé par rapport au modèle de variance ; et
la reformation du réseau neuronal convolutionnel sur la base de l'autre image capturée et du modèle statistique actualisé s'il est déterminé qu'il y a une réduction d'une valeur de variance ou d'écart-type du modèle statistique actualisé par rapport au modèle statistique.

2. Procédé selon la revendication 1, dans lequel la génération du modèle statistique comprend :

la détermination de valeurs de variance ou d'écart-type pour des pixels dans l'image capturée selon une vérité de terrain ou une vérité de terrain simulée (110) ; et
la génération du modèle statistique sur la base des valeurs de variance ou d'écart-type.

3. Procédé selon la revendication 1, dans lequel la formation du réseau neuronal convolutionnel comprend :

la détermination d'une probabilité de valeurs de pixel des parcelles aléatoires comprenant des valeurs de pixel échangées sur la base du modèle statistique ; et
la formation du réseau neuronal convolutionnel par la maximisation de la probabilité de chaque valeur de pixel des parcelles aléatoires comprenant des valeurs de pixel échangées.

**4.** Procédé selon la revendication 3, dans lequel la maximisation de la probabilité de chaque valeur de pixel comprend la minimisation du logarithme négatif d'une moyenne de toutes les probabilités de pixel.

**5.** Procédé selon la revendication 3 ou la revendication 4, dans lequel la probabilité pour chaque valeur de pixel est déterminée sur la base d'une distribution gaussienne avec une valeur moyenne et une valeur de variance ou d'écart-type, dans lequel la valeur moyenne est une valeur moyenne de chaque pixel des parcelles aléatoires de l'image capturée et la valeur de variance ou d'écart-type est obtenue à partir du modèle statistique.

**6.** Procédé selon une quelconque revendication précédente, comprenant l'application du réseau neuronal convolutionnel formé à l'image capturée.

**7.** Procédé selon une quelconque revendication précédente, dans lequel le réseau neuronal convolutionnel est un réseau neuronal codeur-décodeur.

**8.** Système comprenant un ou plusieurs processeurs et un ou plusieurs dispositifs de stockage (610), dans lequel le système est configuré pour réaliser le procédé selon l'une quelconque des revendications 1 à 7.

**9.** Système selon la revendication 8, comprenant un dispositif d'imagerie couplé au processeur pour l'acquisition d'images de microscopie.

**10.** Réseau neuronal convolutionnel pour le débruitage d'image formé conformément au procédé selon l'une quelconque des revendications 1 à 7.

**11.** Programme d'ordinateur avec un code de programme pour réaliser le procédé selon l'une quelconque des revendications 1 à 7.

Fig. 1

Fig. 2

Fig. 3

Fig. 4

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10032256 B1

**Non-patent literature cited in the description**

- Deep Joint Noise Estimation and Removal for High ISO JPEG Images. **YUE HUANJING et al.** 2018 24TH INTERNATIONAL CONFERENCE ON PATTERN RECOGNITION (ICPR). IEEE, 20 August 2018, 153-158
- Noise2Noise: Learning Image Restoration without Clean Data. **JAAKKO LEHTINEN et al.** ARXIV.ORG. CORNELL UNIVERSITY LIBRARY, 12 March 2018
- **GUOLIANG KANG**. PatchShuffle regularization. *arXiv.org*, 22 July 2017, 1-10